(19) Europäisches Patentamt
European Patent Office
Office européen des brevets

(11) **EP 2 136 221 B1**

(12) **EUROPEAN PATENT SPECIFICATION**

(45) Date of publication and mention
of the grant of the patent:
**09.10.2013 Bulletin 2013/41**

(51) Int Cl.:
*G01S 13/93* *(2006.01)*    *G01S 13/76* *(2006.01)*
*G01S 5/00* *(2006.01)*

(21) Application number: **08158501.0**

(22) Date of filing: **18.06.2008**

(54) **Validity check of vehicle position information transmitted over a time-synchronized data link**

Echtheitsprüfung für die Fahrzeugpositionsinformation, die über eine zeitsynchronisierte Datenverknüpfung übertragen wird

Vérification de validité des informations de position de véhicule transmises par des liens de données synchronisées

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**23.12.2009 Bulletin 2009/52**

(73) Proprietor: **SAAB AB**
**581 88 Linköping (SE)**

(72) Inventor: **Andersson, Svante**
**603 75 Norrköping (SE)**

(74) Representative: **Herbjørnsen, Rut et al**
**Zacco Sweden AB**
**Valhallavägen 117**
**Box 5581**
**114 85 Stockholm (SE)**

(56) References cited:
**WO-A-2006/040730    US-B1- 7 116 266**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to the field of traffic surveillance, and more particularly to a method for validating positional data allegedly indicating the position of a vehicle received over a time synchronized data link.

### Background Art

Surveillance of air traffic is today managed by air traffic control (ATC) systems using primary and secondary radar. ATC systems currently under development use other or complementary techniques in the surveillance of air traffic. One such system is called automatic dependent surveillance-broadcast (ADS-B) which, on a long time scale, is expected to gradually replace current systems as a source for ATC information.

The basic idea of the ADS-B system is that all aircraft broadcast their own state vector, comprising position and status information, to all nearby aircraft and ground stations. Thus each aircraft has a complete picture of the surrounding traffic and the traffic close to a ground station can be monitored on ground.

The ADS-B system and its ability to automatically provide each aircraft with information relating to the surrounding traffic opens up for functionality such as automatic or semiautomatic separation provision and collision avoidance. These functions are particularly important in flight control of unmanned aerial vehicles (UAVs) but may also be important as a precautionary feature in conventional manned aircraft.

Central to the ADS-B concept is the data link enabling the intended functionality. There are currently three different types of data links under consideration; Mode S ES, VDL Mode 4 and UAT.

Mode S ES is an extension of the conventional Mode S secondary surveillance radar system. VDL Mode 4 is a newly developed standard for a data link transponder compatible with ADS-B requirements. UAT is only considered for general aviation in the US.

Unfortunately, ADS- B systems of today suffer from a drawback. The position information received from surrounding air traffic has to be trusted to be correct. This is both a safety and security problem, safety in the sense that if the transmitting system emits an erroneous position it might cause a hazardous situation, and security in the sense that the system becomes prone to malicious use by emitting faked position reports.

For example, if an ADS-B message indicates an erroneous position of the aircraft from which it is transmitted, decisions made on the basis of that ADS-B message may have devastating consequences. An operator of an ATC system based on ADS-B data or a pilot/autopilot of an aircraft utilizing an ADS-B-based aircraft surveillance system, may be fooled to order/control an aircraft towards instead of away from the aircraft transmitting the erroneous ADS-B message.

US 7 116 266 discloses a TCAS system capable of performing an integrity check of the position reported by another aircraft. The integrity check comprises the steps of interrogating an aircraft transponder onboard the other aircraft including a request for enhanced surveillance data including the position of the second aircraft, receiving a reply to the interrogation request, calculating the position of the second aircraft based on the message response time and bearing, comparing the calculated position with the received position, and determining the integrity of the received position.

### Summary

It is an object of the present invention to provide a vehicle surveillance system that is less prone to errors and less sensitive to malicious use.

This object is achieved by a method for validating positional data in vehicle surveillance applications wherein vehicles transmit positional data indicating their own position to surrounding vehicles. The method comprises the steps of:

> receiving, at a receiving unit, a first signal carrying positional data indicating an alleged position of a vehicle, transmitted from a radio source over a data link;
> estimating the distance between the receiving unit and the radio source based on the time of flight, TOF, and the propagation velocity of the received signal, and
> determining a deviation value indicating the difference between a distance to the position of a vehicle according to the received positional data and the estimated distance to the radio source.

The data link is a data link over which transmissions of signals carrying positional data indicating alleged positions of vehicles are initiated at given transmission points in time that are known by all users of said data link, and the TOF is determined based on the time elapsed from the transmission point in time of said first signal to the time of reception of at least a first part of said first signal.

2

By estimating the distance to a radio source transmitting positional data relating to an alleged position of a vehicle, and determining a deviation value that is indicative of the difference between the distance to the position of a vehicle according to the received positional data and the estimated distance to the radio source, the above method provides for a way of determining whether the radio source really is located at the position given by the positional data that it transmits.

Since the method is used in a self-reporting vehicle surveillance system, meaning that each vehicle transmits positional data indicating its own position, a mismatch between the distance to the reported position and the estimated distance to the radio source indicates that something is not right and that the received positional data cannot be indiscriminately relied upon.

The criteria of the radio link over which the positional data are received according to the method are fulfilled by for example the STDMA-based radio link used in ADS-B VDL Mode 4 systems. The method can hence be used to validate positional data contained in VDL Mode 4 messages broadcasted by vehicles equipped with VDL Mode 4 transponders. This feature greatly enhances the criticality of the VDL Mode 4 positional data in vehicle surveillance applications and enables use of the data in safety critical vehicle surveillance systems.

According to an aspect of the invention, the method is used to discard received positional data that is found unreliable. When used for that purpose in e.g. an aircraft-based aircraft surveillance system or a ground-based ATC system, the suggested method reduces the risk of making navigational decisions based on incorrect information of surrounding traffic.

The object is also achieved by a vehicle surveillance system for vehicle surveillance applications wherein vehicles transmit positional data indicating their own position to surrounding vehicles. The vehicle surveillance system comprises:

reception means adapted to receive a first signal carrying positional data indicating an alleged position of a vehicle, transmitted from a radio source over a data link;

distance-estimation means adapted to estimate the distance to the radio source based on the time of flight, TOF, and the propagation velocity of the received signal, and

comparison means adapted to determine a deviation value indicating the difference between a distance to the position of a vehicle according to the received positional data and the estimated distance to the radio source.

The data link is a data link over which transmissions of signals carrying positional data indicating alleged positions of vehicles are initiated at given transmission points in time that are known by all users of said data link, and the distance-estimation means is adapted to determine the TOF based on the time elapsed from the transmission point in time of said first signal to the time of reception of at least a first part of said first signal.

The vehicle surveillance system according to the invention may be included in any type of receiving unit, such as a vehicle or stationary unit, for validating positional data that is transmitted from surrounding radio sources over the time-synchronized data link. For example, it can be included in aircraft or ships for use in separation provision and/or collision avoidance applications, or it can be included in ground-based ATC or VTS stations for monitoring air traffic or maritime traffic, respectively.

Besides the increased flight safety offered by the vehicle surveillance system according to the invention, aircraft comprising such systems and using them for automatic aircraft separation provision will lower their fuel consumption since their pre-programmed flight plan will not be altered due to erroneous VDL Mode 4 messages reported by surrounding radio sources.

**Brief description of the drawings and tables**

The present invention will become more fully understood from the detailed description provided hereinafter and the accompanying drawings, which are not necessarily to scale, and are given by way of illustration only. In the different drawings, same reference numerals correspond to the same element.

Figs. 1A and 1B illustrate a typical operational environment of the invention.

Figs. 2A and 2B illustrate schematically the concept of the present invention.

Figs. 3A and 3B illustrate a principle for determining the time of flight for an ADS-B VDL Mode 4 message between a radio source and a receiving unit.

Fig. 4 illustrates an embodiment of a vehicle surveillance system according to the invention.

Fig. 5 is a flowchart illustrating a method for validating received positional data according to the invention.

Table 1 illustrates an estimate of the expected accuracy in distance estimation of a radio source.

Table 2 illustrates an estimate of the expected accuracy in validation of an ADS-B position reported by a VDL Mode 4 message.

## Acronyms and abbreviations

Acronym Definition

| ADS-B | Automatic Dependent Surveillance-Broadcast |
|---|---|
| AIS | Automatic Identification System |
| ATC | Air Traffic Control |
| LADAR | Laser Detection and Ranging |
| Mode S ES | Mode-S Extended Squitter |
| MSO | Message Start Opportunities |
| STDMA | Self-organizing Time Division Multiple Access |
| TDMA | Time Division Multiple Access |
| TOF | Time of Flight |
| UAT | Universal Access Transceiver |
| UAV | Unmanned Aerial Vehicle |
| UTC | Coordinated Universal Time |
| VDL | VHF Data Link |
| VTS | Vessel Traffic Service |

## Detailed description

An aircraft or an air traffic control (ATC) ground station utilizing an ADS-B-based vehicle surveillance system is completely dependent on that the information in ADS-B messages received from surrounding aircraft is correct. Specifically, positional data contained in the ADS-B messages from emitting aircraft have to be trusted to be correct. The flaw is that as long as the received messages conform to the correct format they will be interpreted as ADS-B messages and, as such, relied upon by the vehicle surveillance systems. This fact makes ADS-B-based vehicle surveillance systems extremely vulnerable to ADS-B transponder malfunction and malicious use by transmission of faked ADS-B data.

ADS- B systems suffer from the problem that the receiver of an ADS- B message does not have any means to check whether the contents of the message are valid. An erroneous report will not be detected as long as it conforms to the proper message format.

This flaw is considered to be both a safety and security problem and is considered to be a major obstacle for future use of ADS-B data in various vehicle surveillance systems, such as aircraft-based separation provision and/or collision avoidance systems, and stationary vehicle surveillance systems, such as for example ground-based ATC systems used to monitor air traffic near airports.

The invention presented herein is a method and a system which greatly increases the safety of a vehicle surveillance system based on ADS-B VDL Mode 4 by providing a possibility to validate the positional data contained in received VDL Mode 4 messages.

The proposed principles utilize the fact that the vehicle positions in an ADS-B system are self-reported, meaning that all vehicles in such a system broadcast state vectors indicating their own position. By providing a possibility to estimate the distance to a radio source from which a received VDL Mode 4 message was transmitted, the invention allows for validity check of the positional data contained in the received message. In general term, this is achieved by checking whether the estimated distance to the radio source from which the VDL Mode 4 message was transmitted is consistent with the position stated in the message. Since the vehicle positions are supposed to be self-reported, a mismatch between the estimated and reported position indicates that the reported position cannot be indiscriminately relied upon.

This improvement will enhance the criticality of the positional data in ADS-B VDL Mode 4 systems and thus enable use of the data in safety critical vehicle surveillance systems.

As will be understood, the principles described herein for validating positional data is relevant and applicable to any vehicle surveillance system receiving self-reported positional data from surrounding vehicles over a time-synchronized data link. A time-synchronized data link should in this context be construed as a data link over which transmissions are initiated at points in time that are known by all users of the data link. An example of such a time-synchronized data link is the STDMA data link which is divided into a plurality of timeslots, each starting at a well-defined point in time that is known by all data link users, and defined such that a transmission within a given timeslot is initiated directly upon start of that timeslot. STDMA data links are used in, e.g., ADS-B VDL Mode 4 systems for air traffic surveillance and AIS systems for maritime traffic surveillance. In both the ADS-B VDL Mode 4 system and the AIS system, the vehicles (aircraft and ships/vessels, respectively) transmit positional data indicating their own position to surrounding vehicles. It should thus be understood that the principles described herein for validating received positional data are applicable not only in ADS-B VDL Mode 4 systems but also in AIS systems.

However, the invention will hereinafter be described mainly in the context of an ADS- B VDL Mode 4- based aircraft surveillance system for separation provision and/or collision avoidance applications, residing in an aircraft. Aircraft-based aircraft surveillance systems used for separation provision applications, collision avoidance applications, or both, are sometimes referred to as Sense & Avoid systems.

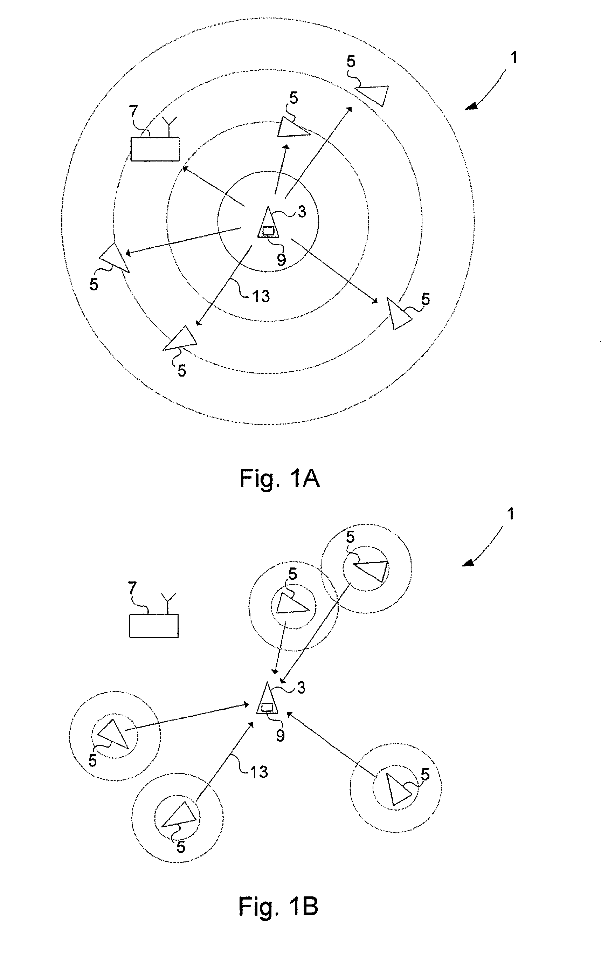

Figs. 1A and 1B illustrate airspace 1 in which a host aircraft 3 surrounded by a plurality of surrounding aircraft 5 are located. An ATC ground station 7 for supervising the air traffic in the airspace 1 is also shown.

Each aircraft 3, 5 comprises an ADS-B transponder 9 (only shown for host aircraft 1 for illustrative purposes) conforming to the VDL Mode 4 format for broadcasting their state vectors to all nearby aircraft and ground stations, and for receiving and interpreting VDL Mode 4 messages 13 from surrounding aircraft. The ATC ground station 7 also comprises a VDL Mode 4 transponder for receiving and interpreting received messages. The VDL Mode 4 messages 13 comprise positional data relating to the positions of the aircraft from which they are transmitted. Typically, the VDL Mode 4 messages also comprise other aircraft specific status information, such as an aircraft identifier and the current speed of the aircraft.

In Fig. 1A the host aircraft 3 broadcasts its state vector to all nearby aircraft 5 and the ground station 7, and in Fig. 1B the surrounding aircraft 5 broadcast their state vectors to the host aircraft 3 and typically also to all other aircraft 5 as well as the ground station 7. In this way, each aircraft 3, 5 and the ground station 7 can have a complete picture of all aviation traffic in the monitored airspace 1.

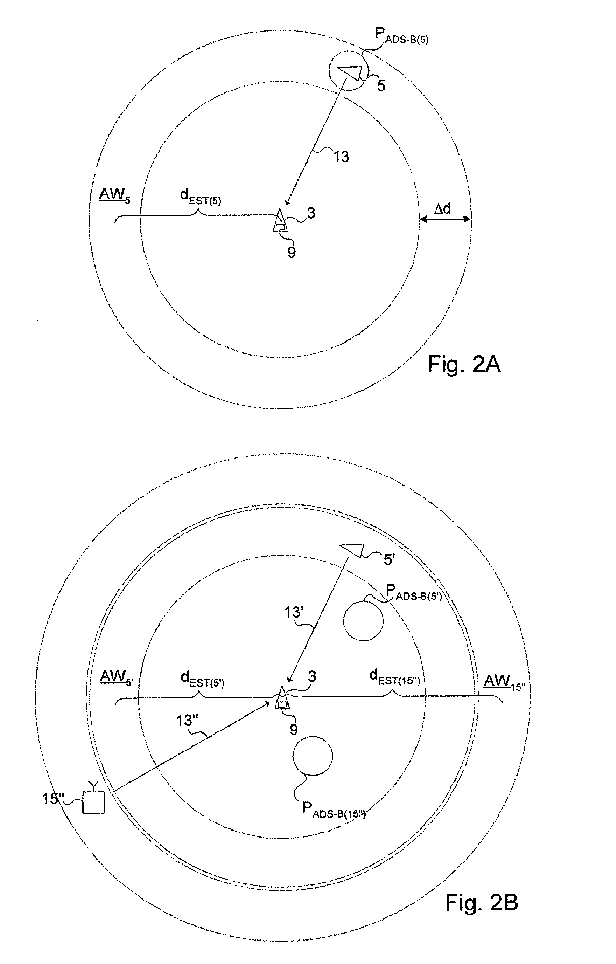

Figs. 2A and 2B illustrate schematically the concept of the present invention.

In Fig. 2A, an aircraft 5 transmits an ADS-B VDL Mode 4 message 13 carrying information indicating at least the position $P_{ADS-B(5)}$ of said aircraft 5. The alleged position $P_{ADS-B(5)}$ of a vehicle as stated in a VDL Mode 4 message 13 will hereinafter be referred to as the ADS-B position or reported position. The positional data contained in an VDL Mode 4 message 13 is associated with a certain uncertainty and, therefore, the reported position $P_{ADS-B(5)}$ of the aircraft 5 is illustrated with a dotted circle that is somewhat bigger than the actual aircraft. Typically, the positional data contained in a VDL Mode 4 message 13 is based on GPS information and is therefore associated with a well known uncertainty which, as well known in the art, for example depends on how many GPS satellites the aircraft has contact with when the position is determined.

The host aircraft 3 picks up the VDL Mode 4 message 13 and registers the reported position $P_{ADS-B(5)}$ of the aircraft 5. However, instead of indiscriminately relying on the reported ADS-B position $P_{ADS-B(5)}$ and e.g. use said position as input parameters to an aircraft surveillance system of the host aircraft 3, the host aircraft 3 according to the invention comprises means for validating the received positional data. As mentioned above, this is in general terms achieved by estimating the distance $d_{EST(5)}$ to the radio source 5 from which the VDL Mode 4 message 13 was transmitted to see whether this distance $d_{EST(5)}$ is consistent with the reported position $P_{ADS-B(5)}$. If the estimated distance $d_{EST(5)}$ to the radio source differs too much from the distance to the reported position $P_{ADS-B(5)}$, the host aircraft 3 and its Sense & Avoid system can take actions, such as refusing the received positional data to be used in flight safety critical applications. The way the estimated distance $d_{EST(5)}$ to the radio source 5 transmitting the VDL Mode 4 message 13 is calculated will be described in more detail later on.

Based on the estimated distance $d_{EST(5)}$ to the radio source transmitting the VDL Mode 4 message 13, the host aircraft 3 can set up an acceptance window $AW_5$. If the reported position $P_{ADS-B(5)}$ is found somewhere within this acceptance window $AW_5$, the received positional data can be considered reliable. The distance range $\Delta d$ of the acceptance window $AW_5$ can be chosen depending on the criticality of the application in which the received positional data is to be used and, preferably, by taken the uncertainties associated with both the reported position $P_{ADS-B(5)}$ and the estimated distance $d_{EST(5)}$ into consideration.

It should be appreciated that the reported position $P_{ADS-B(5)}$ is associated with uncertainties in all space dimension and that the dotted line indicating it hence should be construed as a cross section of a three-dimensional body of which shape depends on the positional uncertainties in each space dimension. Also, since the estimated distance $d_{EST(5)}$ to the radio source 5 does not say anything about the direction to the radio source, it should be understood that the dotted circles defining the acceptance window $AW_5$ illustrated in Fig. 2A are only cross sections of two spherical shells. Based on solely the distance estimation, the radio source may be located anywhere within the space volume between these spherical shells.

While Fig. 2A illustrates a scenario in which the reported ADS-B position $P_{ADS-B(5)}$ is found within the acceptance window $AW_5$, indicating that the radio source from which the received VDL Mode 4 message 13 was transmitted most likely is located at said position $P_{ADS-B(5)}$ and that the positional data hence can be relied upon, an opposite scenario will now be described with reference to Fig. 2B.

In Fig. 2B, an aircraft 5' transmits a VDL Mode 4 message 13' which is received by the host aircraft 3. The host aircraft 3 retrieves the positional data contained in the message 13' and registers the reported ADS- B position $P_{ADS-B(5')}$. In accordance with what is described above, the host aircraft 3 estimates the distance $d_{EST(5')}$ to the radio source 5' from which the message 13' was transmitted and uses the estimated distance to determine an acceptance window $AW_{5'}$. In this case, the position $P_{ADS-B(5')}$ of the aircraft 5' as stated in the VDL Mode 4 message 13' is not found within the acceptance window $AW_{5'}$, indicating a considerable deviation between the estimated distance $d_{EST(5')}$ to the radio source 5' and the distance to the reported position $P_{ADS-B(5')}$ of same radio source. This deviation indicates to the host aircraft 3 that the positional data in the received VDL Mode 4 message 13' cannot be indiscriminately relied upon.

Since the ADS- B VDL Mode 4 system is based on that each aircraft broadcasts its own state vector, an inconsistency between the estimated distance $d_{EST(5')}$ to a radio source 5' from which a VDL Mode 4 message 13' is transmitted and the position $P_{ADS-B(5')}$ indicated by the positional data contained in that message 13' typically depends on one of two things: First, the VDL Mode 4 transponder, the GPS receiver, or any other vital system component of the transmitting aircraft may be malfunctioning. Secondly, the radio source transmitting the VDL Mode 4 message may be deliberately arranged to report another position than its own. It is a well- known weakness of VDL Mode 4 systems that "fake" messages may be broadcasted deliberately with malicious intent in order to create confusion or even in order to take out the aircraft surveillance system of both aircraft and ground stations in a certain area by flooding that area with deceptive VDL Mode 4 messages.

The latter scenario is also illustrated in Fig. 2B where a malicious VDL Mode 4 message 13" is seen to be transmitted from a VDL Mode 4 transponder 15" located on the ground. The positional data contained in the message 13", which is received and registered by the host aircraft 3, deceptively alleges that an aircraft is located at the position $P_{ADS-B(15'')}$ However, when the host aircraft 3 (or any other unit receiving the message 13" and having an aircraft surveillance system utilizing the inventive concept disclosed herein) tries to validate the received positional data by estimating the distance $d_{EST(5')}$ to the radio source 15" from which it received the message 13", it will find out that the reported position $P_{ADS-B(15'')}$ is not located within the acceptance window $AW_{15''}$ and can hence discard the positional data contained in the received VDL Mode 4 message 15" as unreliable.

The method and means for estimating the distance to radio sources from which VDL Mode 4 messages are received will now be described in more detail.

In order to estimate the distances $d_{EST(5)}$, $d_{EST(5')}$, $d_{EST(15'')}$ to the radio sources 5, 5', 15" broadcasting the VDL Mode 4 messages 13, 13', 13" in Figs. 2A and 2B, the host aircraft 3 utilizes the time of flight (TOF) for the messages 13, 13', 13" between the radio source and the host aircraft. As the propagation velocity of the radio signals carrying the VDL Mode 4 messages is known (the speed of light), the distances can be determined.

VDL Mode 4 is based on STDMA which is a channel access method allowing several users to share the same frequency channel by dividing it into different slots based on time. Each VDL Mode 4 transponder is required to transmit its state vector in specific timeslots. The start of each timeslot is determined by the VDL Mode 4 standard and based on UTC (GPS time) . Each timeslot starts at a specific point in time and ends at a specific point in time (as defined by UTC), which points in time are globally defined and known by all transponders conforming to the VDL Mode 4 standard. More detailed information about VDL Mode 4 and STDMA is found in, e.g., the document entitled "Self- organizing Time Division Multiple Access VDL Mode 4- Standards and Recommended Practices", which is Appendix D of the Report on Agenda Item 5 of the fourth meeting of the Aeronautical Mobile Communications Panel (AMCP/ 4) ; Montreal, 25 March- 4 April 1996 (also found on the Internet at http: //www.icao.int/anb/ panels/acp/ meetings/ amcp4/item- 5d.pdf, 2008- 04- 22) .

The proposed principle for determining the TOF for a VDL Mode 4 message is to estimate the TOF based on the time between the start of the timeslot in which the message is received and the point in time at which the message is received.

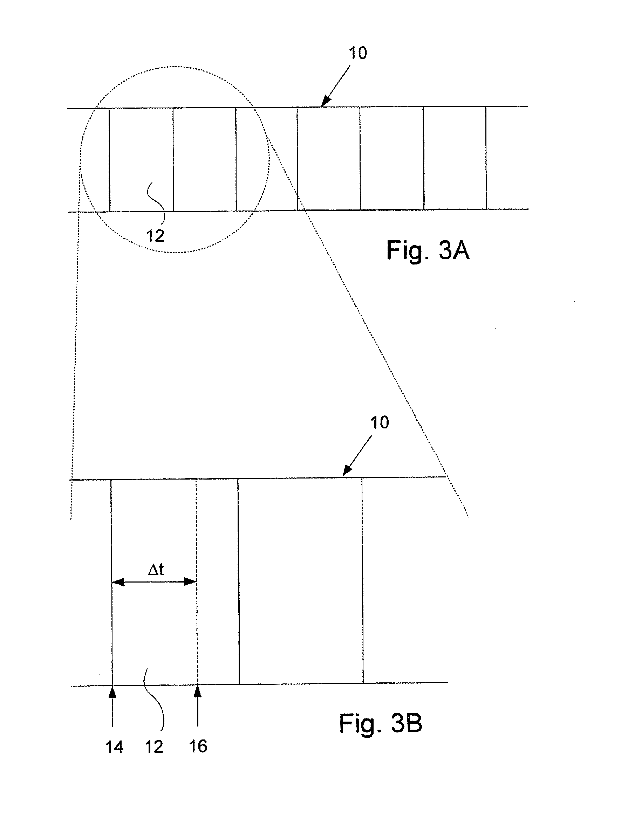

This principle is illustrated in Figs. 3A and 3B which illustrate a frame 10 that is a part of a VDL Mode 4 data stream. The frame 10 is divided into a plurality of timeslots 12. Different timeslots are allocated to different VDL Mode 4 transponders. For example, the timeslot indicated by reference numeral 12 can be allocated to the aircraft indicated by reference numeral 5 in Fig. 2A. At the start 14 of the timeslot 12, the aircraft 5 broadcasts the VDL Mode 4 message 13 over the STDMA-based VDL Mode 4 data link. Typically, the transmission of the VDL Mode 4 message 13 commences almost immediately upon the start 14 of the timeslot 12 allocated for that transmission. According to the VDL Mode 4 standard and recommended practice, transmission of a VDL Mode 4 message should commence no later than 1 microsecond after the start 14 of the timeslot 12 allocated for that transmission, which normally is a much longer time period than needed. The host aircraft 3, which also comprises a VDL Mode 4 transponder 9 and hence knows when each timeslot starts and ends, receives the message 13 at some point in time 16 within the timeslot 12 (the STDMA timeslots are long enough to ensure that at least the start of a VDL Mode 4 message is received within the same timeslot as it is broadcasted). The host aircraft 3 comprises means to determine the point in time 16 at which the message 13 arrives. Typically, the VDL Mode 4 transponder 9 itself comprises means for determining when a message 13 is received. Since the VDL Mode 4 transponder of the host aircraft knows exactly when the timeslot started, the elapsed time $\Delta t$ between start of the timeslot and reception of the message can be determined. As this time At substantially corresponds to the TOF of the VDL Mode 4 message 13, and as the radio signal carrying the message 13 propagates at known speed (the speed of light), the host aircraft 3 can calculate an estimated distance $d_{EST(5)}$ to the aircraft 5 from which it received the VDL Mode 4 message 13. As the VDL Mode 4 standard permits a transponder to commence transmission up to 1 microsecond after the start of a timeslot, such a transmission delay is preferably accounted for by the receiving unit when determining the TOF for the signal. For example, the TOF may be estimated as the elapsed time $\Delta t$ between start of the timeslot and reception of the signal minus 500 nanoseconds (half the allowable transmission delay).

It should be appreciated that the method described above for estimating a distance to a radio source from which a signal is received is applicable not only in communications systems using STDMA-based radio links, such as VDL Mode 4 systems or AIS systems, but in any communications system using time-synchronized data links.

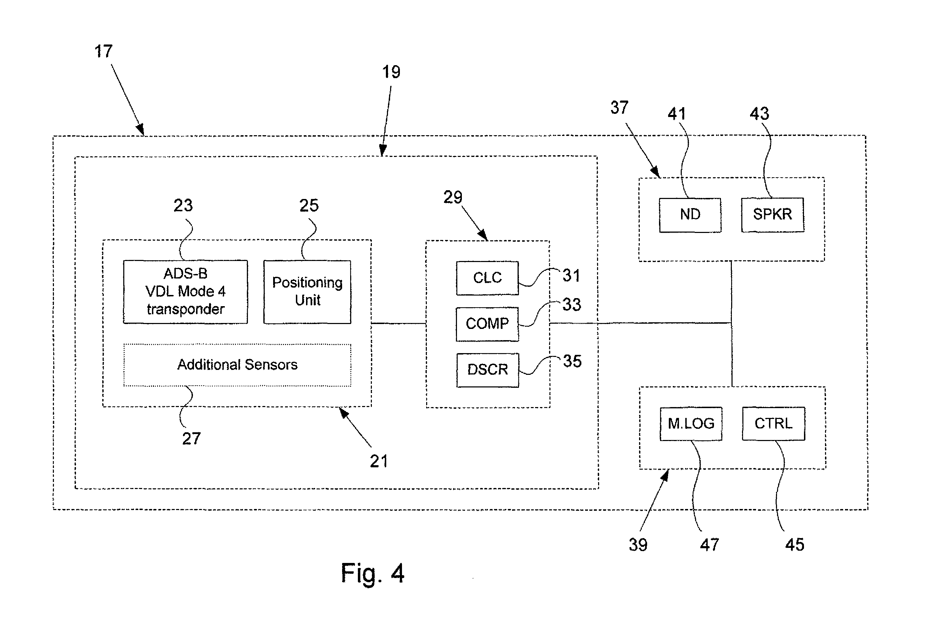

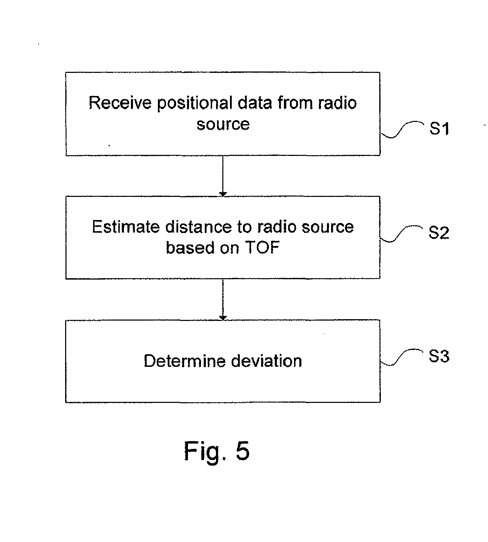

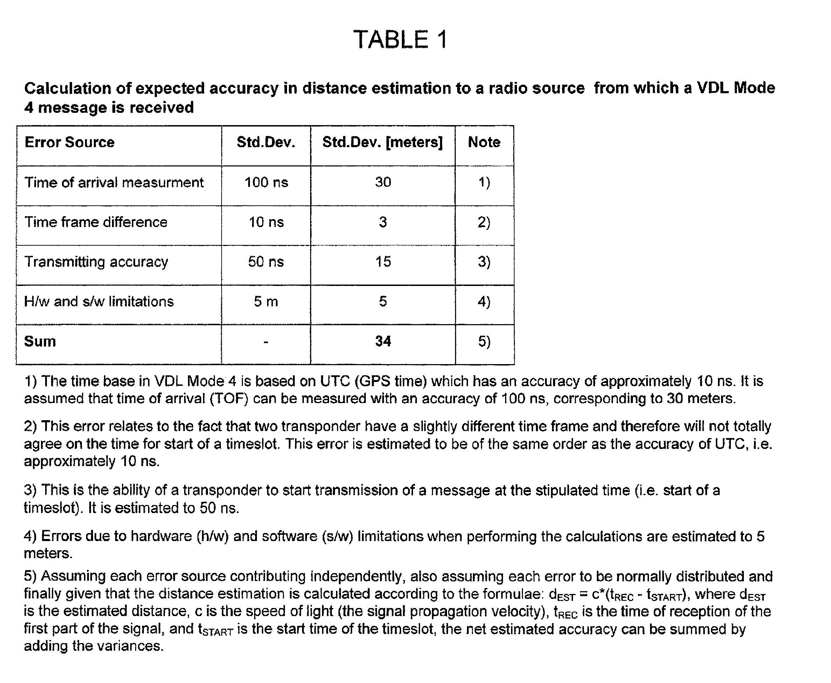

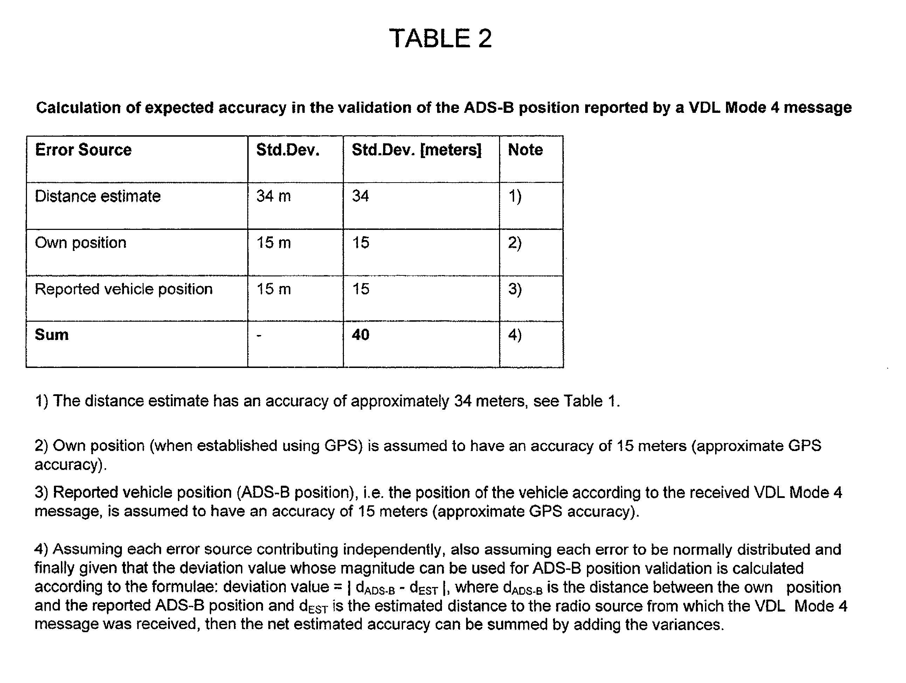

Fig. 4 illustrates an embodiment of a vehicle surveillance system 17 according to the invention. The vehicle surveillance system 17 comprises a subunit 19 that may be included in any type of receiving unit, such as a vehicle or stationary unit, for validating self-reported positional data that is transmitted over a time-synchronized data link. In this exemplary embodiment, however, the vehicle surveillance system subunit 19 is used in an ADS-B VDL Mode 4-based aircraft surveillance system 17 for aircraft separation provision and/or collision avoidance applications. It should be understood that the vehicle surveillance system 17 in Fig. 5 is associated with a host aircraft, such as the host aircraft 3 in Figs. 2A and 2B. The host aircraft comprising the aircraft surveillance system 17 may be a conventional manned aircraft or a UAV that is either manually but remotely piloted or that flies autonomously based on pre-programmed flight plans.

The aircraft surveillance system 17 comprises a sensor module 21 which typically comprises a plurality of passive and active sensors for monitoring and communicating with the world around.

The sensor module 21 comprises an ADS-B transponder 23 conforming to the VDL Mode 4 format for broadcasting and receiving VDL Mode 4 messages. The VDL Mode 4 transponder 23 may comprise one or several built-in antennas and/or use other antennas (not shown) in the aircraft surveillance 17 for receiving and transmitting VDL Mode 4 messages. The sensor module 21 further comprises a positioning unit 25 for self-location determination. Typically but not necessarily, the positioning unit 25 is a GPS receiver receiving GPS data enabling it to determine its own and thereby the host aircraft position, speed and direction of motion, as well as determining UTC time. The positioning unit 25 may also use other navigational systems such as the Galileo positioning system or the GLONASS in order to determine its position in global coordinates. The positioning unit 25 could also include an inertial navigation module keeping track of the host aircraft position without the need of external references. Additional functionality well known in the art for further increasing the accuracy in the positioning of a GPS receiver may also be included in the positioning unit 25. The positioning unit 25 may also include sensors for measuring the atmospheric pressure, thus enabling the host aircraft elevation to be determined without the need of external references as well known in the art. The positioning unit 25 may comprise one or several built-in antennas and/or use other antennas (not shown) in the aircraft surveillance system 17 for receiving signals, e.g. from GPS satellites, enabling self-location determination. The positioning unit 25 is connected to the VDL Mode 4 transponder 23 for providing the transponder with information relating to the position of the host aircraft, which information then may be included in VDL Mode 4 messages transmitted by the host aircraft. The positioning unit 25 may also form an integral part of the VDL Mode 4 transponder 23.

The sensor module 21 may further comprise a sensor block 27 comprising various additional sensors for communicating with and monitoring surrounding vehicles and ground stations. For example, the sensor block 27 may comprise primary radar equipment, laser detection and ranging (LADAR) equipment, secondary surveillance radar equipment, cameras, infrared cameras, etc.

When the VDL Mode 4 transponder 23 receives a VDL Mode 4 message from a nearby radio source, the distance to the radio source is estimated as previously described. The VDL Mode 4 transponder may be arranged to conduct the distance estimation itself, or it can be connected to an external unit (not shown) arranged to conduct the estimation based on the signals received by the transponder 23. The VDL Mode 4 transponder also extracts the ADS-B position reported in the received VDL Mode 4 message, which position allegedly is the position of a nearby aircraft. Furthermore, the positioning unit 25 is arranged to establish the self-location of the host aircraft when a VDL Mode 4 message is received. The estimated distance to the radio source, the reported ADS-B position and the established self-location of the host aircraft are then sent to a position validation unit 29.

The position validation unit 29 comprises a calculation unit 31 arranged to process the information received from the sensor module 21 in different ways. For example, the calculation unit 31 can be arranged to conduct the distance estimation to the radio source based on the signals received by the transponder 23. The position validation unit 29 also comprises a comparator 33 arranged to compare the estimated distance to the radio source from which the VDL Mode 4 message was transmitted with the distance to the ADS-B position stated in that message, and determine a deviation value that indicates the difference between the two distances. Furthermore, the position validation unit 29 comprises a discriminator 35 which is arranged to process the reported ADS-B position data in different ways based on the deviation value that is determined by the comparator 33 and hence indicative of the reliability of the currently processed ADS-B position data.

According to one embodiment of the invention, the calculation unit 31 is arranged to take the estimated distance to the radio source and the self-location of the host aircraft as input parameters and, based on these parameters, calculate estimated positions of the radio source from which the VDL Mode 4 message was received. This calculation would result in an estimated position of the transmitting radio source somewhere along the surface of a spherical shell surrounding the host aircraft. The comparator 33 then compares the estimated position of the radio source with the reported ADS-B position and determines a deviation value indicating the distance between said spherical shell and the reported ADS-B position. The discriminator 35 can in this case be arranged to determine whether the reported ADS-position is found inside or outside an acceptance window surrounding the spherical shell, such as the acceptance windows $AW_5$, $AW_{5'}$, $AW_{15''}$ illustrated in Figs. 2A and 2B, and, if found outside, discard the ADS-B positional data as unreliable.

According to another embodiment, the calculation unit 31 is arranged to take the self-location of the host aircraft provided by the positioning unit 25 and the ADS-B position reported in the VDL Mode 4 message as input parameters and, based on these positions, calculate a distance between the host aircraft and the reported ADS-B position. The comparator 33 is then arranged to compare the so calculated distance with the estimated distance to the radio source from which the VDL Mode 4 message was transmitted and determine a deviation value indicating the difference between the two distances. The discriminator 35 can in this case be arranged to compare the deviation value with an error-acceptance value and, if the deviation value is bigger than the error-acceptance value, discard the ADS-B positional data as unreliable.

Preferably, the discriminator 35 is arranged to take the uncertainties associated with the reported ADS-B position and the estimated distance to the radio source reporting it into account when determining how to process the received ADS-B position data. These uncertainties can be either pre-programmed into the discriminator 35 or provided to the discriminator 35 by the sensor module 21 if the components responsible for retrieving the reported ADS-B position and estimate the distance to the radio source are capable of determining the uncertainties associated therewith. These uncertainties will be discussed in greater detail later on.

In this exemplary aircraft surveillance system 17, the discriminator 35 is communicatively connected to an information unit 37 and a decision and manoeuvring unit 39 to which it forwards the received ADS-B positions of nearby aircraft, at least when found reliable.

In a conventional, manned aircraft, the information unit 37 is located in the aircraft cockpit and serves to inform the pilot about the surrounding air traffic. The ADS-B positions of the nearby aircraft are typically displayed on a graphical navigational display 53. The information module 37 is also seen to comprise a speaker 43 for providing audible warnings to the pilot in case a nearby aircraft is getting too close to the host aircraft. The host aircraft position is typically provided to the information unit 37 by the positioning unit 25 of the aircraft surveillance system 17. In case the host aircraft with which the aircraft surveillance system 17 is associated is a UAV, the information unit 37 may reside in a ground station at which a pilot is situated to remotely control and/or supervise the UAV. In that case, data, such as the host aircraft position and the ADS-B positions of nearby aircraft received by the VDL Mode 4 transponder 23 in the UAV, is typically broadcasted to the ground-based information unit 37 over a radio link.

The decision and manoeuvring unit 39 comprises control means 45 for manoeuvring the host aircraft, and a manoeuvring logic unit 47 for continuously determining the optimal flight route for the host aircraft. The manoeuvring logic unit 47 is arranged to take navigation-critical data as input parameters, analyze said data and determine an optimal speed and flight direction for the host aircraft based on the result of the analysis. One such navigation-critical parameter is the reported ADS-B positions of nearby aircraft. Other may be, e.g., a pre-programmed flight plan, the current speed, position and flight direction of the host aircraft, and the current speed and flight direction of the nearby aircraft. If the host aircraft is an autonomously controlled UAV or a piloted aircraft (manned aircraft or remotely piloted UAV) currently on autopilot, the manoeuvring logic unit 47 may continuously or periodically provide the control means 45 with information on the (momentarily) optimal speed and flight direction in order for the control means 45 to manoeuvre the host aircraft accordingly. If, on the other hand, the host aircraft is manually piloted from cockpit, or remotely piloted from a ground station, the optimal speed and flight direction of the host aircraft as determined by the manoeuvring logic unit 47 can be provided to the pilot and used for decision-making support.

According to one aspect of the invention, the discriminator 35 of the position validation module 29 in the aircraft surveillance system 17 is arranged to discard a received ADS-B position if the deviation value indicating the difference between the distance to the reported ADS-B position and the estimated distance to the radio source reporting it exceeds a certain threshold value. Here "discard" means that the discriminator 35 prevents the ADS-B position from reaching the information unit 37 and the decision and manoeuvring unit 39. Thereby, a reported ADS-B position of a nearby aircraft that cannot be validated by the aircraft surveillance system 17 will never be presented to the aircraft pilot and/or used as a basis for automatic aircraft control.

According to another aspect of the invention, the discriminator 35 does not discard ADS-B positional data even though the distance to the ADS-B position that it indicates deviates substantially from the estimated distance to the radio source transmitting it. Instead, when the deviation value established by the comparator 33 exceeds a certain threshold value, the discriminator 35 is arranged to add a flag indicating that the received ADS-B position may not be trustworthy to the ADS-B data before forwarding the data to the information unit 37 and the decision and manoeuvring unit 39. Thereby, the information unit 37 and the decision and manoeuvring unit 39 can recognize unreliable ADS-B data and act accordingly.

The information unit 37 can in this case be arranged to visually or audibly alert a pilot of the host aircraft that an unreliable ADS-B position of a nearby aircraft has been received and, e.g., indicate the alleged position of the nearby aircraft on the navigation display 41. The manoeuvring logic module 47 of the decision and manoeuvring unit 39 may, upon detection of such a flag indicating an unreliable ADS-B position, be arranged to ignore the ADS-B position and not use it in the determination of the (momentarily) optimal speed and direction of flight for the host aircraft.

According to yet another aspect of the invention, a large deviation value between the distance to an ADS-B position reported by a radio source and an estimated distance to that radio source can be used as an indicator for initiating an additional aircraft position validation process. If the deviation value determined by the comparator 33 exceeds a predetermined threshold value, the discriminator 35 can be arranged to ask the additional sensors 27 in the Sense & Avoid system 17 whether they are able to detect an aircraft at the given ADS-B position. If they are, the ADS-B position can be forwarded to and used by the information unit 37 and the decision and manoeuvring unit 39 as described above. If, on the other hand, the sensors of the aircraft surveillance system 17 are unable to confirm the presence of an aircraft at the alleged ADS-B position, the discriminator 35 either discards the ADS-B positional data or sets a flag indicating that it is found unreliable before forwarding it, as also described above.

Although the functionality implementing the inventive concept has been described herein as residing in separate functional modules, such as the sensor module 21 and the position validation unit 29, it should be appreciated that this is made only to facilitate description of the aircraft surveillance system 17 and that the functionality may be implemented in many other ways without departing from the scope of the invention.

It should also be appreciated that the self-location of the host aircraft would not be a required parameter in the process of validating received positional data if the received positional data indicate the relative position of the transmitting aircraft in relation to the host aircraft instead of the absolute position of the transmitting aircraft. If, for example, a first aircraft in an airspace monitored by a ground-based ATC station receives a relative position of a second aircraft from the ATC station, this relative position could be validated by the second aircraft if transmitted to said second aircraft in a message from said first aircraft. In this case, the second aircraft does not need to know its own position in order to validate the received positional data.

Fig. 5 is a flowchart illustrating a method for validating received positional data according to the invention. The method steps may be performed by any receiving unit receiving such data, such as a vehicle (e.g. an aircraft) or a stationary unit (e.g. an ATC ground station). When describing the method, simultaneous reference will, however, be made to the exemplary operational environment of the invention illustrated in Figs. 2A and 2B, in which the receiving unit is the host aircraft 3.

In step S1, a signal 13, 13', 13" originating from a radio source 5, 5', 15" is received by the host aircraft 3. The signal 13, 13', 13" is transmitted over a time-synchronized data link and carries positional data that indicates an alleged position $P_{ADS-B(5)}$, $P_{ADS-B(5')}$, $P_{ADS-B(15'')}$ of an aircraft. "Alleged" here means that there may or may not be an aircraft at the position reported by the radio source. As previously mentioned, the invention is intended for vehicle surveillance systems in which each vehicle transmits its own position, and the case in which an aircraft is not at the position reported by the radio source hence indicates either system equipment malfunction or that the radio source is deliberately arranged to transmit deceptive positional data.

In step S2, the host aircraft 3 estimates the distance to the radio source 5, 5', 15" based on the TOF for a signal travelling between the radio source and the host aircraft 3, and the propagation velocity of the signal. The TOF is determined based on the elapsed time between the time of transmission and the time of reception of the signal. The time of transmission is, as aforementioned, defined by the time-synchronized data link and known by all data link users. It should be appreciated that there may be a small difference, i.e. a transmission delay, between the time of transmission as stipulated by the time-synchronized data link protocol and the point in time at which transmission of the signal actually starts. Preferably, such a transmission delay is taken into account when determining the TOF of the signal.

In step S3, the host aircraft 3 determines a deviation value indicative of the difference between the distance to the position $P_{ADS-B(5)}$, $P_{ADS-B(5')}$, $P_{ADS-B(15'')}$ reported by the radio source 5, 5', 15" and the estimated position $P_{EST(5)}$, $P_{EST(5')}$, $P_{EST(15'')}$ of said radio source 5, 5', 15'' calculated in step S2. If the reported position $P_{ADS-B(5)}$, $P_{ADS-B(5')}$, $P_{ADS-B(15'')}$ is an absolute position, the own position of the host aircraft 3 must be used when estimating the distance to the reported position. If, on the other hand, the reported position $P_{ADS-B(5)}$, $P_{ADS-B(5')}$, $P_{ADS-B(15'')}$ is a relative position of an aircraft in relation to the host aircraft, knowledge about the host aircraft's own position is not needed. The determined deviation value is an indicator of the reliability of the received positional data and can be used as a basis for deciding whether the received positional data should be used or discarded by the receiving unit (in this exemplary case host aircraft 3) .

With reference now to Tables 1 and 2, the uncertainties associated with reported VDL Mode 4 ADS-B positions and the estimated distances to the radio sources transmitting them will be discussed in more detail.

Table 1 illustrates an estimate of the expected accuracy in the distance estimation of the radio source.

The contributions from different error sources have been estimated using 1 sigma values, i.e. the normal standard deviation. Furthermore, it has been assumed that the errors are normally distributed and mutually independent. Under these assumptions the net error can be calculated by summing the variances (the square of the standard deviation). The calculation shows that the distance to a transmitting VDL Mode 4 transponder could be measured with an accuracy of approximately 34 meters given that the transmitting accuracy is 50 nanoseconds. As aforementioned, the VDL Mode 4 standard permits a transmission delay between the time of transmission as stipulated by the STDMA data link and the actual start of transmission of at most 1 microsecond (which typically is a much longer transmission delay than needed). If the actual start of transmission is assumed to occur 500 nanoseconds after the stipulated time of transmission, the worst-case transmitting accuracy would be 500 nanoseconds. Performing the same calculations with a transmission accuracy of 500 nanoseconds would show that the distance to a transmitting VDL Mode 4 transponder could be estimated with an accuracy of approximately 155 meters.

Table 2 illustrates an estimate of the expected accuracy in the validation of the ADS-B position reported by a VDL Mode 4 message.

When performing the ADS-B position validation, both the accuracy of the reported ADS-B position from the transmitting VDL Mode 4 transponder and the accuracy of own position has to be taken into account. As both the own position and the ADS-B positions reported by surrounding vehicles typically are measured with GPS, the accuracy of these positions will be roughly 15 meters. As shown in Table 2, the validation can be performed with an accuracy of approximately 40 meters (1 sigma), given that the transmitting accuracy is 50 nanoseconds.

The principle proposed in this document for validating received positional data ensures that navigational decisions are made based on correct information of surrounding traffic. The above described vehicle surveillance system may be included in aircrafts and ground-based ATC stations as well as ships and land-based VTS stations to increase air and maritime traffic safety.

In particular, the suggested principle for validating positional data received in ADS-B messages conforming to the VDL Mode 4 format provides for safe and secure VDL Mode 4-based aircraft surveillance systems, which advantageously can be used for both separation provision and collision avoidance applications due to the increased reliability of the data on which decisions are made.

Besides the increased flight safety offered by the vehicle surveillance system 17 according to the invention, aircraft comprising such a system and using it for automatic aircraft separation provision will lower their fuel consumption since their pre-programmed flight plan will not be altered due to erroneous ADS-B messages reported by surrounding aircraft.

Although the invention has been described with reference to specific embodiments, these descriptions are not meant to be construed in a limiting sense. Various modifications of the disclosed embodiments, as well as alternative embodiments of the invention will become apparent to persons skilled in the art upon reference to the description of the invention. It should be appreciated by those skilled in the art that the conception and specific embodiments disclosed may be readily utilized as a basis for modifying or designing other structures for carrying out the same purposes of the present invention. It should also be realized by those skilled in the art that such equivalent constructions do not depart from the scope of the invention as set forth in the appended claims.

It is therefore contemplated that the claims will cover any such modifications or embodiments that fall within the true scope of the invention.

## Claims

1. A method for validating positional data in vehicle surveillance applications wherein vehicles (3, 5; 5') transmit positional data indicating their own position to surrounding vehicles (3, 5; 5'), said method comprising the steps of:

receiving (S1), at a receiving unit (3), a first signal (13; 13', 13") carrying positional data indicating an alleged position ($P_{ADS-B(5)}$; $P_{ADS-B(5')}$, $P_{ADS-B(15")}$) of a vehicle, transmitted from a radio source (5; 5', 15") over a data link;
estimating (S2) the distance ($d_{EST(5)}$, $d_{EST(5')}$, $d_{EST(15")}$) between the receiving unit (3) and the radio source (5; 5', 15") based on the time of flight, TOF, and the propagation velocity of the received signal (13; 13', 13"), and
determining (S3) a deviation value indicating the difference between a distance to the position ($P_{ADS-B(5)}$; $P_{ADS-B(5')}$, $P_{ADS-B(15")}$) of a vehicle according to the received positional data and the estimated distance ($d_{EST(5)}$,

$d_{EST(5')}$, $d_{EST(15'')}$) to the radio source (5; 5', 15"),
**characterized in that** said data link is a data link over which transmissions of signals carrying positional data indicating alleged positions of vehicles are initiated at given transmission points in time (14) that are known by all users of said data link, and **in that** said TOF being determined based on the time ($\Delta$t) elapsed from the transmission point in time (14) of said first signal to the time of reception (16) of at least a first part of said first signal.

2. A method according to claim 1, wherein said deviation value is used as an indicator of the reliability of the received positional data.

3. A method according to claim 1 or 2, wherein the receiving unit (3) is an aircraft (3) or a ship that is navigated based on received positional data from surrounding aircraft (5) or ships, the method further comprises the step of:

   discarding the received positional data if said deviation value exceeds a predetermined threshold value so that navigational decisions are not based on incorrect positional data.

4. A method according to any of the preceding claims, wherein the deviation value is determined according to the formulae:

$$\text{deviation value} = |\, d_{ADS-B} - d_{EST}\,|$$

   where $d_{ADS-B}$ is the distance between the position of the receiving unit (3) and the alleged position ($P_{ADS-B(5)}$; $P_{ADS-B(5')}$, $P_{ADS-B(15')}$) of a vehicle, and $d_{EST}$ is the estimated distance ($d_{EST(5)}$, $d_{EST(5')}$, $d_{EST(15'')}$) between the receiving unit (3) and the radio source (5; 5', 15") .

5. A method according to any of the preceding claims, wherein said first signal (13; 13', 13") is an ADS-B message (13; 13', 13") conforming to the VDL Mode 4 format and the data link is a TDMA-based data link, such as a STDMA data link.

6. A vehicle surveillance system (17) for vehicle surveillance applications wherein vehicles (3, 5; 5') transmit positional data indicating their own position to surrounding vehicles (3, 5; 5'), comprising:

   reception means (9; 23) adapted to receive (S1) a first signal (13; 13', 13") carrying positional data indicating an alleged position ($P_{ADS-B(5)}$; $P_{ADS-B(5')}$, $P_{ADS-B(15'')}$) of a vehicle, transmitted from a radio source (5; 5', 15") over a data link;
   distance- estimation means (9; 23, 31) adapted to estimate (S2) the distance ($d_{EST(5)}$, $d_{EST(5')}$, $d_{EST(15'')}$) to the radio source (5; 5', 15") based on the time of flight, TOF, and the propagation velocity of the received signal (13; 13', 13"), and
   comparison means (33) adapted to determine (S3) a deviation value indicating the difference between a distance to the position ($P_{ADS-B(5)}$; $P_{ADS-B(5')}$, $P_{ADS-B(15'')}$) of a vehicle according to the received positional data and the estimated distance ($d_{EST(5)}$, $d_{EST(5')}$, $d_{EST(15'')}$) to the radio source (5; 5', 15"),
   **characterized in that** said data link is a data link over which transmissions of signals carrying positional data indicating alleged positions of vehicles are initiated at given transmission points in time (14) that are known by all users of said data link, and **in that** said distance-estimation means (9; 23, 31) is adapted to determine said TOF based on the time ($\Delta$t) elapsed from the transmission point in time (14) of said first signal to the time of reception (16) of at least a first part of said first signal.

7. A vehicle surveillance system (17) according to claim 6, further comprising discriminating means (35) connected to an information module (37) for informing a user of surrounding vehicle traffic and/or to a decision and manoeuvring unit (39) for controlling a vehicle in which the system (17) is included, said discriminating means (35) being adapted to discard positional data indicating an alleged position ($P_{ADS-B(5)}$; $P_{ADS-B(5')}$, $P_{ADS-B(15'')}$) of a vehicle to which, according to the deviation value determined by the comparing means (33), the distance differs substantially from the estimated distance ($d_{EST(5)}$, $d_{EST(5')}$, $d_{EST(15'')}$) to the radio source (5; 5', 15") .

8. A vehicle surveillance system (17) according to any of the claims 6 or 7, wherein the reception means (9; 23) comprises an ADS-B transponder (9; 23) conforming to the VDL Mode 4 format, said ADS-B VDL Mode 4 transponder (9; 23) being adapted to receive VDL Mode 4 messages (13; 13', 13") that are transmitted over a TDMA-based data link, such as a STDMA data link.

9. A vehicle surveillance system (17) according to any of the claims 6 to 8, said system (17) being located in an aircraft (3) and used as an aircraft surveillance system (17) for separation provision and/or collision avoidance applications.

10. A vehicle (3, 5; 3, 5'), **characterized in** comprising a vehicle surveillance system (17) according to any of the claims 6 to 9.

11. A vehicle (3, 5; 3, 5') according to claim 10, wherein said vehicle is an aircraft (3, 5; 3, 5').

12. A vehicle (3, 5; 3, 5') according to claim 11, wherein said aircraft (3, 5; 3, 5') is an unmanned aerial vehicle, UAV.

13. A vehicle (3, 5; 3, 5') according to claim 10, wherein said vehicle is a ship.

14. A ground-based air traffic control [ATC] station (7) for air traffic surveillance, **characterized in** comprising a vehicle surveillance system (17) according to any of the claims 6 to 9.

15. A land-based Vessel Traffic Service [VTS] station for maritime traffic surveillance, **characterized in** comprising a vehicle surveillance system (17) according to any of the claims 6 to 9.

## Patentansprüche

1. Verfahren zum Validieren von Positionsdaten in Fahrzeugüberwachungsanwendungen, wobei Fahrzeuge (3, 5; 5') Positionsdaten zur Angabe ihrer eigenen Position an umgebende Fahrzeuge (3, 5; 5') übertragen, wobei das Verfahren die nachfolgenden Schritte umfasst:

an einer Empfangseinheit (3) erfolgendes Empfangen (S1) eines ersten Signals (13; 13', 13"), das Positionsdaten zur Angabe einer vorgeblichen Position ($P_{ADS-B(5)}$; $P_{ADS-B(5')}$, $P_{ADS-B(15")}$) eines Fahrzeuges angibt, mit Übertragung von einer Funkquelle (5; 5', 15") über eine Datenverbindung;
Schätzen (S2) des Abstandes ($d_{EST(5)}$, $d_{EST(5')}$, $d_{EST(15")}$) zwischen der Empfangseinheit (3) und der Funkquelle (5; 5', 15") auf Grundlage der Flugzeit (Time Of Flight) TOF und der Ausbreitungsgeschwindigkeit des empfangenen Signals (13; 13', 13") und
Bestimmen (S3) eines Abweichungswertes zur Angabe der Differenz zwischen einem Abstand zu der Position ($P_{ADS-B(5)}$; $P_{ADS-B(5')}$, $P_{ADS-B(15")}$) eines Fahrzeuges entsprechend den empfangenen Positionsdaten und dem geschätzten Abstand ($d_{EST(5)}$, $d_{EST(5')}$, $d_{EST(15")}$) zu der Funkquelle (5; 5', 15"),
**dadurch gekennzeichnet, dass** die Datenverbindung eine Datenverbindung ist, über die Übertragungen von Signalen, die Positionsdaten zur Angabe von vorgeblichen Positionen von Fahrzeugen tragen, zu gegebenen Übertragungszeitpunkten (14) initiiert werden, die allen Anwendern der Datenverbindung bekannt sind, und die Flugzeit TOF auf Grundlage der Zeit ($\Delta t$) bestimmt wird, die von dem Übertragungszeitpunkt (14) des ersten Signals zur Empfangszeit (16) wenigstens eines ersten Teiles des ersten Signals vergangen ist.

2. Verfahren nach Anspruch 1, wobei der Abweichungswert als Indikator für die Zuverlässigkeit der empfangenen Positionsdaten verwendet wird.

3. Verfahren nach Anspruch 1 oder 2, wobei die Empfangseinheit (3) ein Flugzeug (3) oder ein Schiff ist, das auf Grundlage von von umgebenden Flugzeugen (5) oder Schiffen empfangenen Positionsdaten navigiert wird, wobei das Verfahren des Weiteren den nachfolgenden Schritt umfasst:

Aussondern der empfangenen Positionsdaten, wenn der Abweichungswert einen vorbestimmten Schwellenwert übersteigt, damit Navigationsentscheidungen nicht auf unrichtigen Positionsdaten beruhen.

4. Verfahren nach einem der vorhergehenden Ansprüche, wobei der Abweichungswert entsprechend der Formel

$$\text{Abweichungswert} = |\, d_{ADS-B} - d_{EST} \,|$$

bestimmt wird, wobei $d_{ADS-B}$ der Abstand zwischen der Position der Empfangseinheit (3) und der vorgeblichen Position ($P_{ADS-B(5)}$; $P_{ADS-B(5')}$, $P_{ADS-B(15'')}$) eines Fahrzeuges ist und $d_{EST}$ der geschätzte Abstand ($d_{EST(5)}$, $d_{EST(5')}$, $d_{EST(15'')}$) zwischen der Empfangseinheit (3) und der Funkquelle (5; 5', 15'') ist.

5. Verfahren nach einem der vorhergehenden Ansprüche, wobei das erste Signal (13; 13', 13'') eine ADS-B-Mitteilung (13; 13', 13'') ist, die dem VDL-Mode-4-Format entspricht, und die Datenverbindung eine TDMA-basierte Datenverbindung, so beispielsweise eine STDMA-Datenverbindung, ist.

6. Fahrzeugüberwachungssystem (17) für Fahrzeugüberwachungsanwendungen, wobei Fahrzeuge (3, 5; 5') Positionsdaten zur Angabe ihrer eigenen Position an umgebende Fahrzeuge (3, 5; 5') übertragen, umfassend:

Empfangsmittel (9; 23), die ausgelegt sind zum Empfangen (S1) eines ersten Signals (13; 13', 13''), das Positionsdaten zur Angabe einer vorgeblichen Position ($P_{ADS-B(5)}$; $P_{ADS-B(5')}$, $P_{ADS-B(15'')}$) eines Fahrzeuges trägt, mit Übertragung von einer Funkquelle (5; 5', 15'') über eine Datenverbindung;

Abstandsschätzmittel (9; 23, 31), die ausgelegt sind zum Schätzen (S2) des Abstandes ($d_{EST(5)}$, $d_{EST(5')}$, $d_{EST(15'')}$) zu der Funkquelle (5; 5', 15'') auf Grundlage der Flugzeit TOF und der Ausbreitungsgeschwindigkeit des empfangenen Signals (13; 13', 13''), und

Vergleichsmittel (33), die ausgelegt sind zum Bestimmen (S3) eines Abweichungswertes, der die Differenz zwischen einem Abstand zu der Position ($P_{ADS-B(5)}$; $P_{ADSB(5')}$, $P_{ADS-B(15'')}$) eines Fahrzeuges entsprechend den empfangenen Positionsdaten und dem geschätzten Abstand ($d_{EST(5)}$, $d_{EST(5')}$, $d_{EST(15'')}$) zu der Funkquelle (5; 5', 15'') angibt,

**dadurch gekennzeichnet, dass** die Datenverbindung eine Datenverbindung ist, über die Übertragungen von Signalen, die Positionsdaten zur Angabe von vorgeblichen Positionen von Fahrzeugen tragen, zu gegebenen Übertragungszeitpunkten (14) initiiert werden, die allen Anwendern der Datenverbindung bekannt sind, und die Abstandsschätzmittel (9; 23, 31) ausgelegt sind zum Bestimmen der Flugzeit TOF auf Grundlage der Zeit ($\Delta t$), die von dem Übertragungszeitpunkt (14) des ersten Signals zur Empfangszeit (16) wenigstens eines ersten Teiles des ersten Signals vergangen ist.

7. Fahrzeugüberwachungssystem (17) nach Anspruch 6, des Weiteren umfassend Unterscheidungsmittel (35), die mit einem Informationsmodul (37) zum Informieren eines Anwenders über umgebenden Fahrzeugverkehr und/oder einer Entscheidungs- und Manövriereinheit (39) zum Steuern eines Fahrzeuges, in dem das System (17) beinhaltet ist, verbunden sind, wobei die Unterscheidungsmittel (35) ausgelegt sind zum Aussondern von Positionsdaten, die eine vorgebliche Position ($P_{ADS-B(5)}$; $P_{ADS-B(5')}$, $P_{ADS-B(15'')}$) eines Fahrzeuges angeben, zu dem entsprechend dem durch das durch die Vergleichsmittel (33) bestimmten Abweichungswert der Abstand merklich von dem geschätzten Abstand ($d_{EST(5)}$, $d_{EST(5')}$, $d_{EST(15'')}$) zu der Funkquelle (5; 5', 15'') abweicht.

8. Fahrzeugüberwachungssystem (17) nach einem der Ansprüche 6 oder 7, wobei das Empfangsmittel (9; 23) einen ADS-B-Transponder (9; 23) umfasst, der dem VDL-Mode-4-Format entspricht, wobei der ADS-B-VDL-Mode-4-Transponder (9; 23) ausgelegt ist zum Empfangen von VDL-Mode-4-Mitteilungen (13; 13', 13''), die über eine TDMA-basierte Datenverbindung, so beispielsweise eine STDMA-Datenverbindung, übertragen werden.

9. Fahrzeugsüberwachungssystem (17) nach einem der Ansprüche 6 bis 8, wobei das System (17) in einem Flugzeug (3) befindlich ist und als Flugzeugüberwachungssystem (17) für Trennungs- bzw. Beabstandungsbereitstellungs- und/oder Kollisionsvermeidungsanwendungen verwendet wird.

10. Fahrzeug (3, 5; 3, 5'), **dadurch gekennzeichnet, dass** es ein Fahrzeugüberwachungssystem (17) nach einem der Ansprüche 6 bis 9 umfasst.

11. Fahrzeug (3, 5; 3, 5') nach Anspruch 10, wobei das Fahrzeug ein Flugzeug (3, 5; 3, 5') ist.

12. Fahrzeug (3, 5; 3, 5') nach Anspruch 11, wobei das Flugzeug (3, 5; 3, 5') ein unbemanntes Luftfahrzeug (Unmanned Aereal Vehicle) UAV ist.

13. Fahrzeug (3, 5; 3, 5') nach Anspruch 10, wobei das Fahrzeug ein Schiff ist.

14. Bodenbasierte ATC-Station (Air Traffic Control ATC, Luftverkehrssteuerung) (7) zur Luftverkehrsüberwachung, **dadurch gekennzeichnet, dass** sie ein Fahrzeugüberwachungssystem (17) nach einem der Ansprüche 6 bis 9 umfasst.

**15.** Landbasierte VTS-Station (Vessel Traffic Service VTS, Wasserfahrzeugverkehrsdienst) zur Seeverkehrsüberwachung, **dadurch gekennzeichnet, dass** sie ein Fahrzeugüberwachungssystem (17) nach einem der Ansprüche 6 bis 9 umfasst.

**Revendications**

**1.** Procédé de validation de données de position dans des applications de surveillance de véhicule dans lequel des véhicules (3, 5; 5') transmettent des données de position indiquant leur propre position à des véhicules dans les alentours (3, 5; 5'), ledit procédé comprenant les étapes suivantes :

la réception (S1), dans une unité de réception (3), d'un premier signal (13; 13', 13") transportant des données de position indiquant une position présumée ($P_{ADS-B(5)}$ ; $P_{ADS-B(5')}$, $P_{ADS-B(15")}$) d'un véhicule, transmis depuis une source radioélectrique (5; 5', 15") par le biais d'une liaison de données ;
l'estimation (S2) de la distance ($d_{EST(5)}$, $d_{EST(5')}$, $d_{EST(15")}$) entre l'unité de réception (3) et la source radioélectrique (5; 5', 15") sur la base du temps de vol, TOF, et de la vitesse de propagation du signal reçu (13; 13', 13"), et
la détermination (S3) d'une valeur d'écart indiquant la différence entre une distance à la position ($P_{ADS-B(5)}$; $P_{ADS-B(5)}$, $P_{ADS-B(15")}$) d'un véhicule selon les données de position reçues et la distance estimée ($d_{EST(5)}$, $d_{EST(5')}$, $d_{EST(15")}$) à la source radioélectrique (5; 5', 15"),
**caractérisé en ce que** ladite liaison de données est une liaison de données par le biais de laquelle des transmissions de signaux transportant des données de position indiquant des positions présumées de véhicules sont déclenchées à des moments précis de transmission donnés (14) qui sont connus par tous les utilisateurs de ladite liaison de données, et **en ce que** ledit TOF est déterminé sur la base du temps ($\Delta t$) écoulé entre le moment précis de transmission (14) dudit premier signal et le temps de réception (16) d'au moins une première partie dudit premier signal.

**2.** Procédé selon la revendication 1, dans lequel ladite valeur d'écart sert d'indicateur pour la fiabilité des données de position reçues.

**3.** Procédé selon la revendication 1 ou 2, dans lequel l'unité de réception (3) est un aéronef (3) ou un navire qui est piloté sur la base des données de position reçues d'aéronefs (5) ou de navires dans les alentours, le procédé comprend en outre l'étape suivante :

le rejet des données de position reçues si ladite valeur d'écart dépasse une valeur de seuil prédéterminée de sorte que des décisions de pilotage ne soient pas basées sur des données de position incorrectes.

**4.** Procédé selon l'une quelconque des revendications précédentes, dans lequel la valeur d'écart est déterminée selon la formule :

$$\text{valeur d'écart} = |d_{ADS-B} - d_{EST}|$$

où $d_{ADS-B}$ est la distance entre la position de l'unité de réception (3) et la position présumée ($P_{ADS-B(5)}$; $P_{ADSB(5')}$, $P_{ADS-B(15")}$) d'un véhicule, et $d_{EST}$ est la distance estimée ($d_{EST(5)}$, $d_{EST(5')}$, $d_{EST(15")}$) entre l'unité de réception (3) et la source radioélectrique (5; 5', 15") .

**5.** Procédé selon l'une quelconque des revendications précédentes, dans lequel ledit premier signal (13; 13', 13") est un message ADS-B (13; 13', 13") conforme au format VDL Mode 4 et la liaison de données est une liaison de données basée sur TDMA, telle qu'une liaison de données STDMA.

**6.** Système de surveillance de véhicule (17) pour des applications de surveillance de véhicule dans lequel des véhicules (3, 5; 5') transmettent des données de position indiquant leur propre position à des véhicules dans les alentours (3, 5; 5'), comprenant :

un moyen de réception (9; 23) adapté pour recevoir (S1) un premier signal (13; 13', 13") transportant des données de position indiquant une position présumée ($P_{ADS-B(5)}$ ; $P_{ADS-B(5')}$, $P_{ADS-B(15")}$) d'un véhicule, transmis depuis une source radioélectrique (5; 5', 15") par le biais d'une liaison de données ;

un moyen d'estimation de distance (9; 23, 31) adapté pour estimer (S2) la distance ($d_{EST(5)}$, $d_{EST(5')}$, $d_{EST(15'')}$) à la source radioélectrique (5; 5', 15") sur  la base du temps de vol, TOF, et de la vitesse de propagation du signal reçu (13; 13', 13"), et

un moyen de comparaison (33) adapté pour déterminer (S3) une valeur d'écart indiquant la différence entre une distance à la position ($P_{ADS-B(5)}$; $P_{ADS-B(5')}$, $P_{ADS-B(15'')}$) d'un véhicule selon les données de position reçues et la distance estimée ($d_{EST(5)}$, $d_{EST(5')}$, $d_{EST(15'')}$) à la source radioélectrique (5; 5', 15"), **caractérisé en ce que** ladite liaison de données est une liaison de données par le biais de laquelle des transmissions de signaux transportant des données de position indiquant des positions présumées de véhicules sont déclenchées à des moments précis de transmission donnés (14) qui sont connus de tous les utilisateurs de ladite liaison de données, et **en ce que** ledit moyen d'estimation de distance (9; 23, 31) est adapté pour déterminer ledit TOF sur la base du temps ($\Delta t$) écoulé entre le moment précis de transmission (14) dudit premier signal et le temps de réception (16) d'au moins une première partie dudit premier signal.

7.  Système de surveillance de véhicule (17) selon la revendication 6, comprenant en outre un moyen de discrimination (35) connecté à un module d'information (37) servant à informer un utilisateur d'un véhicule dans les alentours sur la circulation et/ou à une unité de décision et de manoeuvre (39) servant à commander un véhicule qui comporte le système (17), ledit moyen de discrimination (35) étant adapté pour rejeter des données de position indiquant une position présumée ($P_{ADS-B(5)}$; $P_{ADS-B(5')}$, $P_{ADS-B(15'')}$) d'un véhicule pour lequel,  selon la valeur d'écart déterminée par le moyen de comparaison (33), la distance diffère sensiblement de la distance estimée ($d_{EST(5)}$, $d_{EST(5')}$, $d_{EST(15'')}$) à la source radioélectrique (5; 5', 15") .

8.  Système de surveillance de véhicule (17) selon l'une quelconque des revendications 6 ou 7, dans lequel le moyen de réception (9; 23) comprend un transpondeur ADS-B (9; 23) conforme au format VDL Mode 4, ledit transpondeur ADS-B VDL Mode 4 (9; 23) étant adapté pour recevoir des messages VDL Mode 4 (13; 13', 13") qui sont transmis par le biais d'une liaison de données basée sur TDMA, telle qu'une liaison de données STDMA.

9.  Système de surveillance de véhicule (17) selon l'une quelconque des revendications 6 à 8, ledit système (17) étant situé dans un aéronef (3) et sert de système de surveillance d'aéronef (17) pour des applications de fourniture de séparation et/ou d'évitement de collisions.

10. Véhicule (3, 5; 3, 5'), **caractérisé en ce qu'**il comprend un système de surveillance de véhicule (17) selon l'une quelconque des revendications 6 à 9.

11. Véhicule (3, 5; 3, 5') selon la revendication 10, dans lequel ledit véhicule est un aéronef (3, 5; 3, 5').

12. Véhicule (3, 5; 3, 5') selon la revendication 11, dans lequel ledit aéronef (3, 5; 3, 5') est un véhicule aérien sans pilote, UAV.

13. Véhicule (3, 5; 3, 5') selon la revendication 10, dans lequel ledit véhicule est un navire.

14. Station de contrôle de la circulation aérienne [ATC] basée au sol (7) pour la surveillance de la circulation aérienne, **caractérisée en ce qu'**elle comprend un système de surveillance de véhicule (17) selon l'une quelconque des revendications 6 à 9.

15. Station d'organisation du trafic maritime (VTS) basée au sol pour la surveillance du trafic maritime, **caractérisée en ce qu'**elle comprend un système de surveillance de véhicule (17) selon l'une quelconque des revendications 6 à 9.

Fig. 1A

Fig. 1B

$P_{ADS-B(5)}$

5

13

$\underline{AW}_5$

$d_{EST(5)}$

3

9

$\Delta d$

Fig. 2A

5'

$P_{ADS-B(5')}$

13'

$\underline{AW}_{5'}$

$d_{EST(5')}$

3

$d_{EST(15'')}$

$\underline{AW}_{15''}$

13''

9

$P_{ADS-B(15'')}$

15''

Fig. 2B

10

12

**Fig. 3A**

10

Δt

**Fig. 3B**

14   12   16

Fig. 4

EP 2 136 221 B1

Receive positional data from radio source | S1

Estimate distance to radio source based on TOF | S2

Determine deviation | S3

Fig. 5

# TABLE 1

**Calculation of expected accuracy in distance estimation to a radio source from which a VDL Mode 4 message is received**

| Error Source | Std.Dev. | Std.Dev. [meters] | Note |
|---|---|---|---|
| Time of arrival measurment | 100 ns | 30 | 1) |
| Time frame difference | 10 ns | 3 | 2) |
| Transmitting accuracy | 50 ns | 15 | 3) |
| H/w and s/w limitations | 5 m | 5 | 4) |
| Sum | - | 34 | 5) |

1) The time base in VDL Mode 4 is based on UTC (GPS time) which has an accuracy of approximately 10 ns. It is assumed that time of arrival (TOF) can be measured with an accuracy of 100 ns, corresponding to 30 meters.

2) This error relates to the fact that two transponder have a slightly different time frame and therefore will not totally agree on the time for start of a timeslot. This error is estimated to be of the same order as the accuracy of UTC, i.e. approximately 10 ns.

3) This is the ability of a transponder to start transmission of a message at the stipulated time (i.e. start of a timeslot). It is estimated to 50 ns.

4) Errors due to hardware (h/w) and software (s/w) limitations when performing the calculations are estimated to 5 meters.

5) Assuming each error source contributing independently, also assuming each error to be normally distributed and finally given that the distance estimation is calculated according to the formulae: $d_{EST} = c^*(t_{REC} - t_{START})$, where $d_{EST}$ is the estimated distance, c is the speed of light (the signal propagation velocity), $t_{REC}$ is the time of reception of the first part of the signal, and $t_{START}$ is the start time of the timeslot, the net estimated accuracy can be summed by adding the variances.

# TABLE 2

**Calculation of expected accuracy in the validation of the ADS-B position reported by a VDL Mode 4 message**

| Error Source | Std.Dev. | Std.Dev. [meters] | Note |
|---|---|---|---|
| Distance estimate | 34 m | 34 | 1) |
| Own position | 15 m | 15 | 2) |
| Reported vehicle position | 15 m | 15 | 3) |
| **Sum** | - | **40** | 4) |

1) The distance estimate has an accuracy of approximately 34 meters, see Table 1.

2) Own position (when established using GPS) is assumed to have an accuracy of 15 meters (approximate GPS accuracy).

3) Reported vehicle position (ADS-B position), i.e. the position of the vehicle according to the received VDL Mode 4 message, is assumed to have an accuracy of 15 meters (approximate GPS accuracy).

4) Assuming each error source contributing independently, also assuming each error to be normally distributed and finally given that the deviation value whose magnitude can be used for ADS-B position validation is calculated according to the formulae: deviation value = $| d_{ADS-B} - d_{EST} |$, where $d_{ADS-B}$ is the distance between the own position and the reported ADS-B position and $d_{EST}$ is the estimated distance to the radio source from which the VDL Mode 4 message was received, then the net estimated accuracy can be summed by adding the variances.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7116266 B

**Non-patent literature cited in the description**

- Self-organizing Time Division Multiple Access VDL Mode 4 - Standards and Recommended Practices. *Appendix D of the Report on Agenda Item 5 of the fourth meeting of the Aeronautical Mobile Communications Panel (AMCP/4); Montreal,* 25 March 1996, http://www.icao.int/anb/panels/acp/meetings/amcp4/item-5d.pdf